# EUROPÄISCHE PATENTSCHRIFT

(11) **EP 0 306 686 B1**
(45) Veröffentlichungstag und Bekanntmachung des Hinweises auf die Patenterteilung: **30.06.1993**
(21) Anmeldenummer: 88112098.4
(22) Anmeldetag: 27.07.1988
(51) Int. Cl.: H02H 7/122, H02M 5/45, H02M 7/525

(54) **Parallelschwingkreis-Umrichter mit Sicherheitsschaltung**
Parallel resonant circuit invertor with security circuit
Onduleur à circuit résonant parallèle avec circuit de sécurité

(30) Priorität: 05.09.1987 DE 3729786
(43) Veröffentlichungstag der Anmeldung: 15.03.1989
(73) Patentinhaber: AEG-Elotherm GmbH, D-42855 Remscheid (DE)
(72) Erfinder: Matthes, Hans G., Dipl.-Ing., D-5632 Wermelskirchen (DE)
(74) Vertreter: Cohausz & Florack Patentanwälte

(56) Entgegenhaltungen:
- DE-A- 2 722 814
- DE-A- 3 237 716
- DE-A- 3 425 324
- US-A- 3 916 287

## Beschreibung

Die Erfindung betrifft einen Parallelschwingkreis-Umrichter, bestehend aus einem Gleichrichter, einem Wechselrichter mit in einer Brückenschaltung angeordneten Thyristoren, einem an die Lastpunkte der Brückenschaltung angeschlossenen Parallelschwingkreis, wobei im Verbindungszweig zwischen dessen Induktivität und dessen Kapazität eine weitere Kapazität vorgesehen ist, und einer Löschzeitregeleinrichtung zum wechselweisen Zünden (Kommutieren) der die diagonal gegenüberliegenden Brückenzweige bildenden Thyristoren mit einer zur Beibehaltung einer Mindestlöschzeit bestimmten Taktfrequenz.

Ein solcher Umrichter ist aus der DE-OS 34 25 324 bekannt und wird vorzugsweise bei der induktiven Erwärmung von Werkstücken eingesetzt, wobei die Elemente des Lastkreises aus dem ohmsch/induktiven Anteil von Induktionsspule und Werkstück, der sich im Verlaufe des Erwärmungsvorganges ändert, sowie aus dem kapazitiven Anteil einer im allgemeinen wertfesten Reihenschaltung von zwei Kondensatoren bestehen. Desweiteren ist eine Löschzeitregeleianrichtung vorgesehen, die die Thyristoren in der Wechselrichterbrücke mit einer Taktfrequenz ansteuert, die oberhalb der Eigenfrequenz des Parallelschwingkreises liegt, damit in den Paaren diagonal gegenüberliegender Brückenzweige des Wechselrichters eine Kommutierung des Brückenstromes durch die Thyristoren möglich ist. Die Taktfrequenz ist dabei so gewählt, daß sie möglichst wenig oberhalb der Eigenfrequenz des Lastkreises liegt, so daß die Löschzeit der Thyristoren nur wenig von der erforderlichen Mindestlöschzeit abweicht. Hierdurch gibt der Wechselrichter maximale Leistung an den Lastkreis ab.

Zur Erfassung des Ist-Wertes der Löschzeit wird bei dieser bekannten Anordnung eine (bereits in der DE-OS 32 37 716 beschriebene) Meßeinrichtung verwendet, die das Signal für die Löschzeit der Thyristoren von zwei diagonal gegenüberliegenden Brückenzweigen über einen Intergrationsvorgang aus dem Strom bzw. der Spannung am Lastkreis bestimmt. Zum Erhalt der als Sollwert vorgegebenen Mindestlöschzeit wird die Ist-Löschzeit in einer der Diagonalen entweder von Halbperiode zu Halbperiode getrennt oder über mehrere Halbperioden gemittelt erfaßt und über die Löschzeitregeleinrichtung entsprechend eingestellt.

Nachteilig wirkt sich bei dieser bekannten Schaltung jedoch aus, daß bei sprunghaften Änderungen der Impedanz des Lastkreises, wie sie beim induktiven Erwärmen von Werkstücken z.B. infolge von Brückenbildungen im Heizgut auftreten können, auch die Eigenfrequenz des Parallelschwingkreises springt. Dieses Springen kann durch die Löschzeitregelung nicht mehr ausgeglichen werden. Infolgedessen besteht die Gefahr, daß der Strom nicht von dem einen Paar von diagonal gegenüberliegenden Brückenzweigen auf das andere kommutiert, sondern über mehr als eine Halbperiode mit unveränderter Polarität geführt wird. Hierdurch kann es bei dem bekannten Umrichter, der einen Lastkreis, der neben einer Lastkapazität auch eine Kompensationskapazität im Verbindungszweig zwischen Lastinduktivität und Lastkapazität enthält, zu einer Erhöhung der Spannung an der Lastkapazität kommen, wodurch die Wechselrichterthyristoren zerstört werden können.

Aus der US 39 16 287 ist eine Überlastschutzschaltung für einen Wechselrichter bekannt, bei welchem im Falle des Auftretens einer Überlast sämtiche Thyristoren einer N-Phaseninverterdrucke simultan gezündet werden durch eine Impulsquelle, die eine im Vergleich zur normalen Leitezeit jedes Thyristors lange Periodendauer hat. Hierdurch wird erreicht, daß die Thyristoren während der jeweiligen Halbwelle des Oszillationsstromes, in der dieser in Gegenphase mit dem Kurzschlußstrom ist, automatisch gelöscht werden, ohne daß sie unter Last geöffnet werden müssen.

Andererseits ist aus der DE-PS 27 22 814 eine Anordnung für eine Detektorschaltung bekannt, mittels der über Meßwandler von denen jeweils einer, den beiden einander diagonal gegenüberliegenden Brückenzweigen zugeordnet ist, festgestellt wird, wenn außerhalb des durch die Löschzeit bestimmten Intervalls in beiden Paaren von einander gegenüberliegenden Brückenzweigen gleichzeitig Strom fließt bzw. gleichzeitig der Strom Null ist. Hierdurch erfolgt im Falle von Störungen an einzelnen Thyristoren der Brückenschaltung eine Abschaltung der Gleichstromspeisung des Wechselrichters. Wegen der unerwünschten Spannungsspitzen an den Thyristoren des Wechselrichters besteht die Gefahr, daß die Thyristoren zerstört werden. Ferner weist die bekannte Detektorschaltung folgenden Nachteil auf: wenn in den beiden Paaren von einander diagonal gegenüberliegenden Brückenzweigen außerhalb der Löschzeit die Ströme zwar nicht gleichzeitig fließen, aber dennoch nicht in der durch die Zündimpulse bestimmten Phasenlage, so ist die bekannte Detektorschaltung nicht in der Lage, diese nicht ordnungsgemäße Kommutierung festzustellen.

Daher liegt der Erfindung die Aufgabe zugrunde, einen Umrichter der eingangs genannten Art derart weiterzuentwickeln, daß im Falle jeder nicht ordnungsgemäßen Kommutierung infolge von sprunghaften Änderungen der Impedanz des Lastkreises eine unzulässige Spannungserhöhung an den Thyristoren vermieden wird.

Diese Aufgabe wird erfindungsgemäß durch einen Umrichter der eingangs genannten Art dadurch gelöst, daß von einer Sicherheitszündschaltung Zündimpulse unverzögert an alle Thyristoren mindestens so lange geliefert werden, bis alle Thyristoren stromführend sind, wobei der Sicherheitszündschaltung eine Detektorschaltung vorgeordnet ist, die anspricht, wenn entweder beide Brückenzweige außerhalb der Kommutierungsphase gleichzeitig stromlos oder stromführend sind, oder wenn die Thyristoren des Brückenzweige außerhalb der durch die Zündimpulse vorgegebenen Phasenlage stromführend sind.

Die sofortige, gleichzeitige zwangsweise Zündung aller Brückenthyristoren, in dem Falle, daß durch die Detektorschaltung eine nicht ordnungsgemäße Kommutierung festgestellt wird, hat zur Folge, daß ein Stromfluß im Wechselrichter nicht mehr über die Paare einander diagonal gegenüberliegender Brückenzweige, sondern auf direktem Wege über die in jeweils benachbarten Zweigen liegenden Thyristoren erfolgt. Durch die erfindungsgemäße Lösung erfolgt eine Symmetrierung der Spannungen an den Lastpunk einerseits und an den Speisepunkten der Brückenschaltung andererseits, wodurch eine Überspannung an den Thyristore wirksam vermieden wird. Die Detektorschaltung stellt sich daß immer dann eine solche Zwangszündung erfolgt, wenn de Stromfluß in den Strompfaden von einander diagonal gegenüberliegenden Brückenzweigen nicht in der durch die Zündimpulse vorgegebenen Weise abläuft.

Bevorzugte Ausführungsformen sind in den Unteransprüchen gekennzeichnet.

Die Erfindung wird im folgenden anhand einer ein Ausführungsbeispiel zeigenden Zeichnung erläutert.

Der Parallelschwingkreis-Umrichter besteht aus einem von einem Drehstromnetz gespeisten Gleichrichter 1, dem ein Strom- und Spannungsregler 2 zugeordnet ist, einer Glättungsdrossel 3 und einem Wechselrichter 4. Sowohl der Gleichrichter 1 als auch der Wechselrichter 4 sind thyristorisiert.

Ein als Parallelschwingkreis ausgebildeter Lastkreis 5 besteht aus einem Widerstand R, einer Induktivität L, einer Reihenschaltung aus zwei Kapazitäten C, C_{K}, wovon letztere im Verbindungszweig zwischen Kapazität C und Induktivität L angeordnet ist. Der parallelschwingkreis ist an den Lastpunkten der Brückenschaltung des Wechselrichters 4 derart angeschlossen, daß der Lastkreis 5 wechselweise von den durch die Thyristoren, a,a bzw. b,b gebildeten Diagonalen von diagonal gegenüberliegenden Brückenzweigen des Wechselrichters 4 mit Strom versorgt wird. Die den Zündelektroden der Thyristoren des Wechselrichters 4 zugeführten, die Kommutierung einleitenden Zündimpulse werden von einer Löschzeitregeleinrichtung 6 eingestellt. Der in den Lastkreis 5 fließende trapezförmige Strom wird über einen Stromwandler 8 einem Diskriminator 9 zugeführt, der beim Nulldurchgang des Stromes einen Steuerimpuls an die Löschzeitmeßeinrichtung 7 liefert. Mittels eines weiteren Diskriminators 10, der parallel zum Lastkreis 5 angeschlossen ist, wird der Spannungsnulldurchgang der sinusförmigen Spannung ermittelt und beim Nulldurchgang ein Steuersignal an die Löschzeitmeßeinrichtung 7 geliefert. Außerdem erhält die Löschzeitmeßeinrichtung 7 gleichzeitig mit dem an die Thyristoren a, b der beiden diagonalen Brückenzweige gelieferten Zündimpulse ein Startsignal. Die von der Löschzeitmeßeinrichtung 7 ermittelte Löschzeit wird als Istzeit an die Löschzeitregeleinrichtung 6 geliefert, die nach einem Vergleich mit einem zugeführten Sollwert Zündimpulse mit einer Taktfrequenz liefert, die nur wenig oberhalb der Eigenfrequenz des Parallelschwingkreises 5 liegt. Mit dieser aus der EP-PS 109 522 bekannten Meßeinrichtung ist es möglich, die Löschzeit sehr exakt zu erfassen und einen Betrieb des Umrichters unter Sicherstellung einer Mindestlöschzeit zu gewähren.

In je einem Zweig der beiden Paare von einander diagonal gegenüberliegenden Brückenzweigen der Brückenschaltung 4 ist die Primärwicklung eines Übertragers 11 bzw. 12 angeordnet. Die Klemmen der Sekundärwicklungen beider Übertrager, die mit einander entgegengesetzt gepolten Gleichrichterdioden überbrückt sind, sind mit den Eingängen zweier Verstärker 13, 14 verbunden, die auf ihren Ausgangsleitungen 15, 16 jeweils dann ein Gleichstromsignal führen, wenn die Meßwertaufnehmer 11, 13 bzw. 12, 14 einen Stromfluß über den zugehörigen Brückenzweig detektieren. Die Leitungen 15 und 16 sind mit den beiden Eingängen eines Exklusiv-Oder-Gatters 17 verbunden. Das Gatter 17 erzeugt auf seiner Ausgangsleitung 21 stets dann einen Impuls, wenn in den beiden Paaren von einander diagonal gegenüberliegenden Zweigen der Brückenschaltung 4 gleichzeitig ein Strom fließt bzw. gleichzeitig der Strom Null ist. Um ein Ansprechen des Gatters 17 während der Kommutierung, während der in beiden Paaren einander diagonal gegenüberliegender Zweige der Brückenschaltung 4 ein Strom fließt, auszuschalten, werden aus den Zündimpulsen der Thyristoren in den jeweiligen Brückenzweigen über ein Steuergerät 18 während der Kommutierung auf den Leitungen 19 und 20 Gleichstromimpulse erzeugt, so daß beim Vorhandensein der Impulse auf den Leitungen 19 und 20 Impulse auf der Ausgangsleitung 21 unterdrückt werden.

Die Detektorschaltung ist bis hierhin aus der DE-PS 27 22 814 bekannt.

Die Ausgangsleitung 21 ist über eine weitere Logikschaltung 22 mit dem Eingang einer Sicherheitszündschaltung 24 verbunden.

Die weitere Logikschaltung 22 weist an ihrem Eingang zwei Exklusiv-NOR-Gatter auf. Während die Eingänge des ersten Gatters mit der Leitung 15, welche bei stromführendem Wandler 11 (in der Brückendiagonalen ein Signal liefert, und mit der Leitung 20, die an die Zündimpulsleitung der Thyristoren angeschlossen ist, verbunden sind, liegen an den Eingängen des zweiten Gatters die Signale der Leitung 16 (Stromsignal der Thyristoren b) und der Leitung 19 (Zündimpulssignal der Thyristoren a) an. Durch die nachgeschalteten Gatter wird dafür gesorgt, daß ein Impuls auf der Leitung 23 zur Ansteuerung der Sicherheitszündschaltung 24 auch dann gegeben wird, wenn zwar die Wandler 11, 12 nicht gleichzeitig einen Stromfluß detektieren, also die Detektorschaltung 17 nicht anspricht, aber die Thyristoren a, b in einer Phasenlage stromführend sind, die nicht der durch die Zündimpulse für die Thyristoren vorgegebene Phasenlage entspricht.

Erfolgt also durch plötzliche Änderungen der Lastkreisimpedanz und damit verbundener Eigenfrequenzerhöhung ein vorzeitiger Polaritätswechsel des Stromes, noch bevor die nächste Kommutierungsphase eingeleitet wird, wird eine Abweichung zwischen der durch die Zündimpulse vorgegebenen Phasenlage und der durch die Stromwandler 11 bzw. 12 detektierten Ist-Phasenlage erkannt. Somit sorgt die um die vorbeschriebene Funktion ergänzte Detektorschaltung in jedem Falle einer nicht ordnungsgemäßen Kommutierung für eine Ansteuerung der Sicherheitszündschaltung 24. Die Sicherheitszündschaltung 24 steuert einen Hilfszündimpulsgenerator 25 an, dessen Ausgang mit allen Steuersignalanschlüssen der Thyristoren der Brücke 4 verbunden ist. Stellt nun die Detektorschaltung 11 bis 23 eine nicht ordnungsgemäße Kommutierung in der oben beschriebenen Weise fest, beaufschlagt der Hilfszündimpulsgenerator 25 über seine Ausgangsleitungen 26a-d gleichzeitig alle Steuerleitungen der Thyristoren mit Zündimpulsen. Dies geschieht unverzögert, so daß der aufgrund der nicht ordnungsgemäßen Kommutierung auf eine unzulässig hohe Spannung geladene Lastkondensator C in seiner Spannungsaufteilung auf die Thyristoren des Wechselrichters symmetriert wird. Somit wird eine Überspannung an den Thyristoren vermieden. Die aufgrund des gleichzeitigen Zündens aller Thyristoren auftretenden Stromspitzen liegen dabei unterhalb der für den dynamischen Betrieb der Thyristoren zulässigen Werte.

Um die Thyristoren beim Ansprechen der Sicherheitszündschaltung 24 und des Hilfszündimpulsgenerators 25 stabil in den leitenden Zustand zu bringen, werden als Zündimpulse bevorzugt Dauerimpulse eingesetzt. Es ist aber auch möglich, ein sicheres Einschalten der Thyristoren dadurch zu bewirken, daß sie mit einer Zündimpulsfolge angesteuert werden, deren Taktfrequenz im Vergleich zur Taktfrequenz der Löschzeitregeleinrichtung mindestens um den Faktor 5 höher ist.

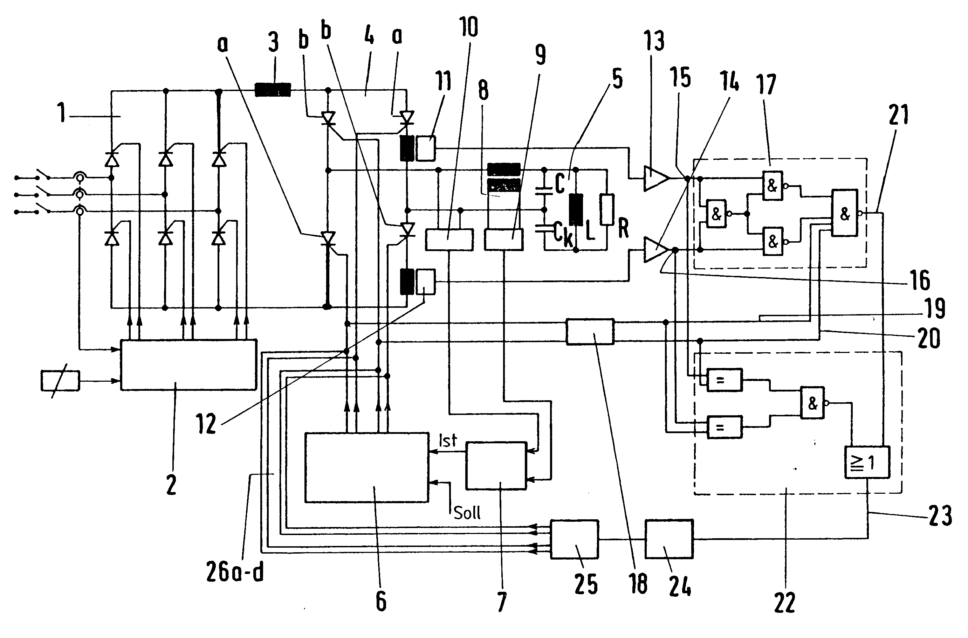

## Patentansprüche

1. Parallelschwingkreis-Umrichter, bestehend aus einem Gleichrichter (1), einem Wechselrichter (4) mit in einer Brückenschaltung angeordneten Thyristoren (a, b), einem an die Lastpunkte der Brückenschaltung angeschlossenen Parallelschwingkreis (5), wobei im Verbindungszweig zwischen dessen Induktivität (L) und dessen Kapazität (C) eine weitere Kapazität (C_{K}) vorgesehen ist, und einer Löschzeitregeleinrichtung (6) zum wechselweisen Zünden (Kommutieren) der die diagonal gegenüberliegenden Brückenzweige bildenden Thyristoren (a, b) mit einer zu Beibehaltung einer Mindestlöschzeit bestimmten Taktfrequenz,
**dadurch gekennzeichnet,** daß von einer Sicherheitszündschaltung (24,25) Zündimpulse unverzögert an alle Thyristoren (a,b) mindestens so lange geliefert werden, bis alle Thyristoren stromführend sind, wobei der Sicherheitszündschaltung eine Detektorschaltung (11-23) vorgeordnet ist, die anspricht, wenn entweder beide Brückenzweige außerhalb der Kommutierungsphase gleichzeitig stromlos oder stromführend sind, oder wenn die Thyristoren (a,b) der Brückenzweige außerhalb der durch die Zündimpulse vorgegebenen Phasenlage stromführend sind.

2. Parallelschwingkreis-Umrichter nach Anspruch 1,
**dadurch gekennzeichnet,** daß die Zündimpulse Dauerimpulse sind.

3. Parallelschwingkreis-Umrichter nach Anspruch 1 oder 2,
**dadurch gekennzeichnet,** daß die Zündimpulse in Gestalt einer Impulsfolge mit einer im Vergleich zur Taktfrequenz mindestens fünffach höheren Frequenz geliefert werden.

## Claims

1. A parallel resonant circuit inverter, comprising: a rectifier (1); an inverter (4) having thyristors (a, b) arranged in a bridge circuit; a parallel resonant circuit (5) which is connected to the load points of the bridge circuit and whose connecting branch includes a further capacitor (C_{K}) between its inductive resistor (L) and its capacitor (C); and a gate-controlled turn-off time control device (6) for the alternate firing (commutation) of the thyristors (a, b) forming the diagonally opposite bridge arms with a timing frequency adapted to maintain a minimum turn-off time, characterized in that firing pulses are delivered by a security firing circuit (24, 25) without delay to all the thyristors (a, b) at least until all the thyristors are energized, the security firing circuit being preceded by a connected detector circuit (11-23) which responds either when both bridge arms are simultaneously currentless or energized outside the commutation phase, or when the thyristors (a, b) of the bridge arms are energized outside the phase determined by the firing pulses.

2. A parallel resonant circuit inverter according to claim 1, characterized in that the firing pulses are continuous pulses.

3. A parallel resonant circuit inverter according to claims 1 or 2, characterized in that the firing pulses are delivered in the form of a pulse sequence having a frequency at least five times higher than the timing frequency.

## Revendications

1. Mutateur à circuit résonant parallèle, constitué d'un redresseur (1), d'un onduleur (4) avec des thyristors (a, b) disposé dans un circuit en pont, un mutateur à circuit résonant parallèle (5) raccordé aux points de charge du circuit en pont, une autre capacité (C_{K}) étant prévue dans la branche de liaison entre son inductance (L) et sa capacité (C) et d'un dispositif de réglage du temps de désamorçage par la gâchette (6) pour l'amorçage alternatif (commutation) des thyristors (a, b) formant la branche de pont diagonalement opposée avec une fréquence de cycles pour le maintien d'un temps de désamorçage par la gâchette minimal,
caractérisé en ce que des impulsions d'amorçage sont délivrées sans temporisation par un circuit d amorçage de sécurité (24, 25) à tous les thyristors (a, b) au moins assez longtemps pour que tous les thyristors soient conducteurs, un circuit de détection (11-23) étant disposé avant le circuit d'amorçage de sécurité et étant sensible au fait soit que les deux branches du pont sont simultanément sans courant ou conductrices en dehors de la phase de commutation ou soit que les thyristors (a, b) des branches de pont sont conducteurs en dehors de la relation des phases prédéterminées par les impulsions d'amorçage.

2. Mutateur à circuit résonant parallèle selon la revendication 1,
caractérisé en ce que les impulsions d'amorçage sont des impulsions continues.

3. Mutateur à circuit résonant parallèle selon la revendication 1 ou la revendication 2,
caractérisé en ce que les impulsions d'amorçage sont délivrées sous forme d'une suite d'impulsions avec une fréquence au moins cinq fois supérieure comparée à la fréquence de cycles.
